# EUROPEAN PATENT APPLICATION

(11) **EP 4 625 383 A1**
(43) Date of publication of application: **01.10.2025**
(21) Application number: 25163528.0
(22) Date of filing: 13.03.2025
(51) Int. Cl.: G08B 25/01, G07C 5/00, H04W 4/38, H04W 4/90, G08B 25/10

(54) **CLOUD-BASED EMERGENCY SERVICES IN VEHICLES**

(30) Priority: 26.03.2024 IN 202441023726
(71) Applicant: NXP USA, Inc., Austin, TX 78735 (US)
(72) Inventor: Pathak, Rajas Kiran, 5656AG Eindhoven (NL); Nirma, 5656AG Eindhoven (NL); Garg, Sampurna, 5656AG Eindhoven (NL); Mohan, Nandini, 5656AG Eindhoven (NL)
(74) Representative: Miles, John Richard

(57) **Abstract**

A system for cloud-based emergency services in vehicles includes a vehicle. A plurality of detectors are coupled to the vehicle. Each detector is configured to generate a respective diagnostic data, wherein the detectors comprise at least an oxygen sensor in a cabin of the vehicle. A data collection system is configured to receive at least one of the diagnostic data prior to an incident, and to autonomously transmit the at least one of the diagnostic data to a cloud processor, wherein the cloud processor is configured to transmit a request based on the diagnostic data received by the cloud processor, to mitigate an effect on an occupant of the vehicle in response to the incident.

## Description

### FIELD

This disclosure relates generally to vehicle telematics, and more specifically to cloud connectivity for automated sensing of vehicular emergencies.

### BACKGROUND

Following a mechanical break-down or an accident involving a vehicle, the occupant may request assistance with a cellular radio connected panic button. Such systems require specific intervention by the occupant and may not convey sufficient information to reliably diagnose the issue confronting the occupant.

These systems also require the occupant to be aware of the issue requiring assistance. Furthermore, autonomous driverless vehicles lack the ability to automatically summon assistance specific to the issue experienced by the vehicle. Automated diagnosis is further challenged by a lack of historical diagnostic data specific to the vehicle, preceding the request for assistance.

### BRIEF DESCRIPTION OF THE DRAWINGS

The present invention is illustrated by way of example and is not limited by the accompanying figures, in which like references indicate similar elements. Elements in the figures are illustrated for simplicity and clarity and have not necessarily been drawn to scale.
FIG. 1 is a schematic view of a system for cloud-based emergency services in vehicles, in accordance with an embodiment of the present disclosure.
FIG. 2 is a flowchart representation of a method for cloud-based emergency services in vehicles, in accordance with an embodiment of the present disclosure.
FIG. 3 is a flowchart representation of a method for cloud-based emergency services in vehicles, in accordance with an embodiment of the present disclosure.

### DETAILED DESCRIPTION

Embodiments described herein provide for a software defined vehicle that maintains a substantially continuous connection to a cloud-based processor to autonomously share diagnostic data generated from detectors coupled to the vehicle. The processor may automatically intervene with a request based on an incident associated with the vehicle to resolve, or mitigate, the incident in an informed manner using the previously received diagnostic data.

A substantially continuous connection includes a temporally continuous connection, as well as a nearly continuous connection where occasional interruptions may occur due to service interruptions, noise interference and other non-ideal events that may occur in real-world telecommunication systems.

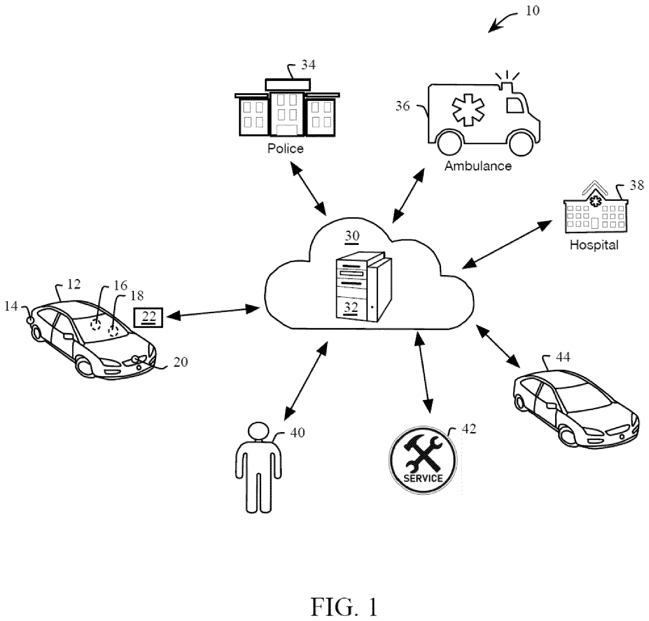

FIG. 1 shows an embodiment 10 of a system for cloud-based emergency services in vehicles, in accordance with the present disclosure. The embodiment 10 includes a vehicle 12 (e.g., the software defined vehicle). The vehicle 12 may include a plurality of detectors 14, (for clarity only one is shown). For example a detector may include sensors to monitor engine, powertrain, cabin features, environmental parameters and the like. The vehicle 12 may further include a video camera 16 and an oxygen sensor 18 (e.g. another type of detector). In one embodiment, the video camera 16 is rotatable to provide up to 360 degrees of video coverage. In another embodiment, the video camera 16 includes multiple cameras to provide different views. In one embodiment, the oxygen sensor 18 is an electrochemical pumping oxygen sensor with a sensitivity capable of detecting a change in oxygen level caused by the breathing of an occupant of the vehicle.

In one embodiment, an occupant is a human, who may suffer distress from an impact or impingement caused by a vehicle accident. In another embodiment, the human may suffer distress from carbon monoxide poisoning. In another embodiment, the occupant is a small child or animal, who may suffer distress from being trapped or locked in a hot vehicle with closed windows. In one example, a trapped occupant is detected by diagnostic data communicated to a cloud 30 including a processor 32. The data may include a change in oxygen level detected by the oxygen sensor 18, an indication that the windows of the vehicle 12 are closed, an elevated temperature, lack of vehicle motion and the like. In response, the processor 32 may send a "request" to the vehicle 12, thereby opening a door or window. In another embodiment, the request from the processor 32 may also activate a horn 20 on the vehicle 12, to attract the attention of nearby individuals to affect a more rapid response.

In one embodiment, the diagnostic data from the plurality of detectors 14 may be received or collected by a data collection system 22 and then further transmitted between the detectors 14 and the cloud 30. When a distress situation is detected, the processor 32 may also notify the police 34, an ambulance 36 a hospital 38 or a person identified as an emergency contact 40. In one embodiment, programmable application software in the vehicle 12 may specify who should be contacted, in what order, and contingent upon the severity of the incident. For example, certain combinations of the diagnostic data may justify immediate contact to the police 34, in contrast to less urgent situations that may only justify a notification call to the emergency contact person 40.

In an embodiment where a vehicle fault (or predicted fault) is detected, relevant diagnostic data may be sent to a service center 42 for further evaluation. If the service center 42 determines that the vehicle fault is significant, the necessary equipment may be dispatched for prompt resolution. In another embodiment, the occupant of the vehicle 12 is notified and a suggestion to dispatch equipment is made. In another embodiment, the vehicle occupant may request real-time diagnosis from the service center 42.

In an embodiment where the vehicle 12 is involved in an accident (e.g., the incident), the video camera 16 may be activated and the generated video footage transmitted to the emergency contact person 40. In another embodiment, the video camera 16 is active prior to the incident, and the video footage is transmitted to one or more of the police 34, the ambulance 36 and the hospital 38 to determine proper resource allocation, rescue equipment, potential causation or liability and the like.

The embodiment 10 may further include at least one other vehicle 44 connected to the cloud 30. The processor 32 may aggregate data from the other vehicle 44 to create a comprehensive view of traffic conditions, road hazards and other relevant information to provide actionable insights (e.g., a traffic routing request) to the vehicle 12 or to traffic management authorities. The embodiment 10 may also exchange information with nearby vehicles in emergency situations.

The cloud 30 connected vehicle may also be leveraged for additional security features and trend analysis, including past driver behavior and past incidents to provide requests or guidance to the driver of the vehicle 12 for improved driving efficiency and safety.

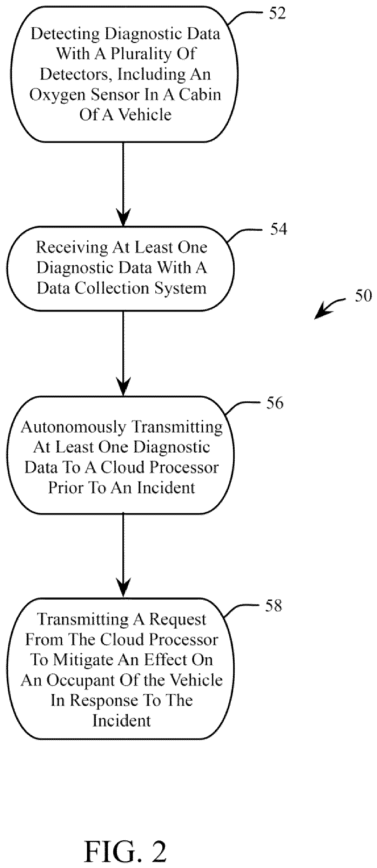

FIG. 2 shows an embodiment 50 of a method for cloud-based emergency services in vehicles. With continued reference to FIG. 1 and FIG. 2, at 52 diagnostic data is detected with a plurality of detectors 14, including an oxygen sensor 18 in a cabin of a vehicle 12. The cabin is considered to be the portion of the vehicle 12 where an occupant typically resides while the vehicle is in motion, and where changes to an oxygen level may occur due to breathing by the occupant. At 54, at least one diagnostic data is received with a data collection system 22. At 56, at least one diagnostic data is autonomously transmitted to a cloud processor 32 prior to an incident. Autonomous transmission may include transmission without human intervention. At 58, a request (e.g., an instruction to the vehicle 12 to perform an action such as unlocking a door or communicating with the police 34, ambulance 36 or hospital 38), from the cloud processor 32 is made to mitigate an effect on an occupant of the vehicle 12 in response to the incident.

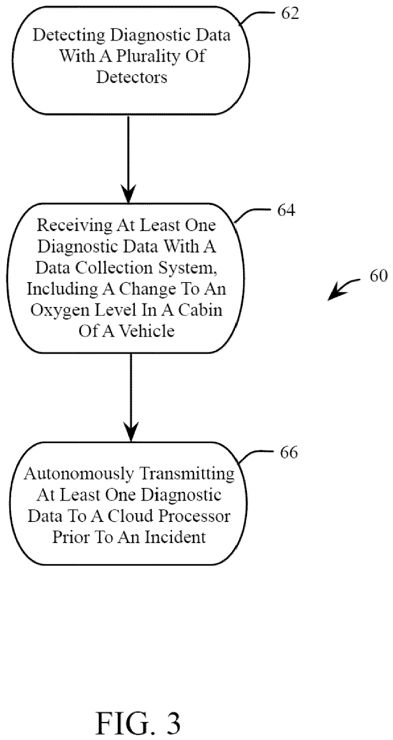

FIG. 3 shows an embodiment 60 of a method for cloud-based emergency services in vehicles. With continued reference to FIG. 1 and FIG. 3, at 62 diagnostic data is detected with a plurality of detectors 14. At 64, at least one diagnostic data is received with a data collection system 22, including a change to an oxygen level in a cabin of the vehicle 12. At 66, at least one diagnostic data is autonomously transmitted to a cloud processor 32 prior to an incident.

A system for cloud-based emergency services in vehicles includes a vehicle. A plurality of detectors are coupled to the vehicle. Each detector is configured to generate a respective diagnostic data, wherein the detectors comprise at least an oxygen sensor in a cabin of the vehicle. A data collection system is configured to receive at least one of the diagnostic data prior to an incident, and to autonomously transmit the at least one of the diagnostic data to a cloud processor, wherein the cloud processor is configured to transmit a request based on the diagnostic data received by the cloud processor, to mitigate an effect on an occupant of the vehicle in response to the incident.

As will be appreciated, at least some of the em bodiments as disclosed include at least the following. In one embodiment, a system for cloud-based emergency services in vehicles comprises a vehicle. A plurality of detectors are coupled to the vehicle, each detector configured to generate a respective diagnostic data, wherein the detectors comprise at least an oxygen sensor in a cabin of the vehicle. A data collection system is configured to receive at least one of the diagnostic data prior to an incident, and to autonomously transmit the at least one of the diagnostic data to a cloud processor, wherein the cloud processor is configured to transmit a request based on the diagnostic data received by the cloud processor, to mitigate an effect on an occupant of the vehicle in response to the incident.

Alternative embodiments of the system for cloud-based emergency services in vehicles include one of the following features, or any combination thereof. The incident comprises a distress to the occupant determined by a change in an oxygen level measured by the oxygen sensor. The cloud processor is configured to unlock the vehicle and the request comprises a notification to a third party outside of the vehicle. The cloud processor is configured to activate a hom of the vehicle. The oxygen sensor comprises an electromechanical pump. The incident comprises a mechanical fault of the vehicle and the cloud processor is configured to transmit to a service center the request and diagnostic data related to the mechanical fault. The incident comprises an accident and the cloud processor is configured to transmit the request to an emergency contact. A rotating video camera is configured to be activated in response to the request, wherein captured video from the camera is transmitted to the emergency contact. The cloud processor is configured to aggregate other data from at least one other vehicle and to share the other data with the vehicle. The cloud processor is configured to transmit a traffic routing request to the vehicle based on the other data.

In another embodiment, a method for cloud-based emergency services in vehicles comprises detecting with a plurality of detectors coupled to a vehicle, a respective diagnostic data of each detector, wherein the detectors comprise at least an oxygen sensor in a cabin of the vehicle. At least one diagnostic data is received from a respective detector with a data collection system. The data collection system autonomously transmits the at least one diagnostic data to a cloud processor prior to an incident. A request is transmitted from the cloud processor based on the diagnostic data received by the cloud processor, to mitigate an effect on an occupant of the vehicle in response to the incident.

Alternative embodiments of the method for cloud-based emergency services in vehicles include one of the following features, or any combination thereof. The cloud processor aggregates other data received from at least one other vehicle. A traffic routing request is transmitted to the vehicle based on the other data. A distress to the occupant is detected by a change to an oxygen level measured by the oxygen sensor. A mechanical fault of the vehicle is detected from the diagnostic data and transmitting the diagnostic data to a third party outside of the vehicle.

In another embodiment, a method for cloud-based emergency services in vehicles comprises detecting with a plurality of detectors coupled to a vehicle, a respective diagnostic data of each detector. At least one diagnostic data is received from a respective detector with a data collection system, wherein the at least one diagnostic data comprises a change to an oxygen level measured by an oxygen sensor in a cabin of the vehicle. The data collection system autonomously transmits the at least one diagnostic data to a cloud processor prior to an incident.

Alternative embodiments of the method for cloud-based emergency services in vehicles include one of the following features, or any combination thereof. A request is transmitted from the cloud processor based on the diagnostic data received by the cloud processor, to mitigate an effect on an occupant of the vehicle in response to the incident. The vehicle is unlocked. A horn of the vehicle is activated. The occupant is an animal.

Although the invention is described herein with reference to specific embodiments, various modifications and changes can be made without departing from the scope of the present invention as set forth in the claims below. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

Unless stated otherwise, terms such as "first" and "second" are used to arbitrarily distinguish between the elements such terms describe. Thus, these terms are not necessarily intended to indicate temporal or other prioritization of such elements.

## Claims

1. A system for cloud-based emergency services in vehicles comprising:
a vehicle;
a plurality of detectors coupled to the vehicle, each detector configured to generate a respective diagnostic data, wherein the detectors comprise at least an oxygen sensor in a cabin of the vehicle; and
a data collection system configured to receive at least one of the diagnostic data prior to an incident, and to autonomously transmit the at least one of the diagnostic data to a cloud processor, wherein the cloud processor is configured to transmit a request based on the diagnostic data received by the cloud processor, to mitigate an effect on an occupant of the vehicle in response to the incident.

2. The system of claim 1 wherein the incident comprises a distress to the occupant determined by a change in an oxygen level measured by the oxygen sensor.

3. The system of claim 2 wherein the cloud processor is configured to unlock the vehicle and the request comprises a notification to a third party outside of the vehicle.

4. The system of claim 2 or 3 wherein the cloud processor is configured to activate a hom of the vehicle.

5. The system of any of claims 2 to 4 wherein the oxygen sensor comprises an electromechanical pump.

6. The system of any preceding claim, wherein the incident comprises a mechanical fault of the vehicle and the cloud processor is configured to transmit to a service center the request and diagnostic data related to the mechanical fault.

7. The system of any preceding claim, wherein the incident comprises an accident and the cloud processor is configured to transmit the request to an emergency contact.

8. The system of claim 7 further comprising a rotating video camera configured to be activated in response to the request, wherein captured video from the camera is transmitted to the emergency contact.

9. The system of any preceding claim, wherein the cloud processor is configured to aggregate other data from at least one other vehicle and to share the other data with the vehicle.

10. The system of claim 9 wherein the cloud processor is configured to transmit a traffic routing request to the vehicle based on the other data.

11. A method for cloud-based emergency services in vehicles comprising:
detecting with a plurality of detectors coupled to a vehicle, a respective diagnostic data of each detector, wherein the detectors comprise at least an oxygen sensor in a cabin of the vehicle;
receiving at least one diagnostic data from a respective detector with a data collection system;
autonomously transmitting with the data collection system the at least one diagnostic data to a cloud processor prior to an incident; and
transmitting a request from the cloud processor based on the diagnostic data received by the cloud processor, to mitigate an effect on an occupant of the vehicle in response to the incident.

12. The method of claim 11 further comprising aggregating with the cloud processor other data received from at least one other vehicle.

13. The method of claim 12 further comprising transmitting a traffic routing request to the vehicle based on the other data.

14. The method of any of claims 11 to 13 further comprising detecting a distress to the occupant by a change to an oxygen level measured by the oxygen sensor.

15. The method of any of claims 11 to 14, further comprising detecting a mechanical fault of the vehicle from the diagnostic data and transmitting the diagnostic data to a third party outside of the vehicle.
